# EUROPEAN PATENT SPECIFICATION

(11) **EP 4 307 430 B1**
(45) Date of publication and mention of the grant of the patent: **11.11.2026**
(21) Application number: 23775152.4
(22) Date of filing: 07.02.2023
(51) Int. Cl.: H01M 10/0567, H01M 4/58, H01M 4/36, H01M 4/587, H01M 4/38, H01M 4/48, H01M 10/0525

(54) **LITHIUM SECONDARY BATTERY HAVING SUPPRESSED METAL ELUTION**
LITHIUMSEKUNDÄRBATTERIE MIT UNTERDRÜCKTER METALLELUTION
BATTERIE SECONDAIRE AU LITHIUM À ÉLUTION MÉTALLIQUE SUPPRIMÉE

(30) Priority: 21.03.2022 KR 20220034565; 01.02.2023 KR 20230013766
(43) Date of publication of application: 17.01.2024
(73) Proprietor: LG Energy Solution, Ltd., Seoul 07335 (KR)
(72) Inventor: HAN, Jun Hyeok, Daejeon 34122 (KR); JI, Su Hyeon, Daejeon 34122 (KR); LEE, Chul Haeng, Daejeon 34122 (KR); AHN, Kyoung Ho, Daejeon 34122 (KR); SHIN, Won Kyung, Daejeon 34122 (KR); LEE, Won Tae, Daejeon 34122 (KR); OH, Young Ho, Daejeon 34122 (KR); JEONG, You Kyeong, Daejeon 34122 (KR)
(74) Representative: Hoffmann Eitle
(86) International application number: PCT/KR2023/001687
(87) International publication number: WO 2023/182649

(56) References cited:
- EP-A1- 2 790 260
- EP-A1- 3 780 223
- WO-A1-2016/068142
- CN-A- 111 640 985
- CN-A- 114 094 181
- KR-A- 20200 029 372
- KR-B1- 101 773 680
- KR-B1- 101 884 568
- US-A1- 2014 234 729

## Description

### [Technical Field]

The present invention relates to a lithium secondary battery having inhibited exsolution of a metal, particularly a transition metal, into an electrolyte.

### [Background of the Invention]

In recent years, secondary batteries have been widely applied to small devices such as portable electronic devices, as well as medium and large devices such as battery packs for hybrid vehicles or electric vehicles, or power storage devices.

Carbon materials have been mainly used as a negative electrode active material of such a lithium secondary battery, and the use of lithium metals, sulfur compounds, silicon compounds, tin compounds, and the like is under consideration. Also, lithium-containing cobalt oxides (LiCoO₂) have been mainly used as a positive electrode active material. In addition, the use of lithium-containing manganese oxides (such as LiMnO₂ having a layered crystal structure, LiMn₂O₄ having a spinel crystal structure, and the like) and lithium-containing nickel oxides (LiNiO₂) is also under consideration.

In recent years, LiCoO₂ is being increasingly used because it has excellent general physical properties such as excellent cycle characteristics, and the like, but it has low safety, and due to the resource limitations of cobalt as a raw material, it is expensive, and there is a limitation in its use in a large amount as a power source in fields such as electric vehicles, and the like. LiNiO₂ has drawbacks in that it is difficult to actually apply to a mass production process with reasonable costs due to the characteristics of its manufacturing method, and lithium manganese oxides such as LiMnO₂, LiMn₂O₄, and the like have poor cycle characteristics, and the like.

Accordingly, a method of using a lithium transition metal phosphate as a positive electrode active material is recently being researched. Lithium transition metal phosphates are mainly divided into LixM₂ (PO₄)₃ having a Nasicon crystal structure and LiMPO₄ having an olivine crystal structure, and they are researched as a material having superior high-temperature stability compared to the existing LiCoO₂. In recent years, Li₃V₂(PO₄)₃ is known as a compound having a Nasicon crystal structure. Among the compounds having an olivine crystal structure, LiFePO₄ and Li (Mn, Fe)PO₄ are most widely researched. Among the olivine crystal structures, particularly, LiFePO₄ has a voltage of approximately 3.5V and a high bulk density of 3.6 g/cm³ compared to lithium. Also, LiFePO₄ is highly likely to be applied as a positive electrode active material for a lithium secondary battery in the future because it has excellent high-temperature stability as a material having a theoretical capacity of 170 mAh/g compared to cobalt (Co), and inexpensive iron (Fe) is used as theraw material.

However, LiMPO₄ having an olivine structure has a problem in that, because it has low electrical conductivity, a considerable increase in internal resistance may be caused during charging and discharging of the battery when it is used as a positive electrode active material. In addition, LiMPO₄ has limitations in that iron (Fe) ions may be exsolved into an electrolyte during charging and dischargingof the battery to induce side reactions of the electrolyte, resulting in degraded battery performance such as a charge/discharge capacity retention rate, and the like.

To solve the above problems, a technique for forming a coating layer on a surface of the positive electrode active material or capturing exsolved iron (Fe) ions has been developed in the art in order to inhibit the exsolution of the iron (Fe) ions.

However, when the coating layer is formed on a surface of the positive electrode active material, an additional process for doping the positive electrode active material is required to prevent the detachment of the coating layer in advance during charging and discharging of the battery. Therefore, there are limitations in that a manufacturing process is complicated and economic feasibility is low. Also, the technique for capturing the exsolved iron ions has a problem in that it has low capture efficiency because iron (Fe) ions have a large effective nuclear charge unlike the transition metal ions.

Accordingly, there is a need for the development of technology capable of more effectively inhibiting and/or preventing metal ions (M⁺) from being exsolved into an electrolyte while the positive electrode includes LiMPO₄ having an olivine structure as a positive electrode active material.

Patent Document 2 describes a lithium ion electrolyte comprising carbonate organic solvents, lithium salts and an additive, wherein the additive is a polymethyl acrylate containing a nitrile group and/or a polymethyl acrylate containing an amine group.

### [Related Art Documents]

### [Patent Documents]

Patent Document 1:Korea Patent Publication No. 10-2021-0111077
Patent Document 2 : CN 114094181 A

### [Brief Summary of the Invention]

Therefore, the present invention is directed to solving at least some of the above problems. For example, an aspect of the present invention provides a lithium secondary battery having inhibited exsolution of metal ions (M⁺) from a positive electrode active material and improving an increase in internal resistance during charging and discharging of the battery while including LiMPO₄ having an olivine structure in a positive electrode as a positive electrode active material.

To solve the above problems, according to one exemplary embodiment of the present invention, there is provided a lithium secondary battery, which includes:
an electrode assembly including a positive electrode, a negative electrode, and a separator interposed between the positive electrode and the negative electrode; and
an electrolyte composition including a lithium salt, an electrolyte additive having a unit represented by any one of the Structural Formulas 1 to 4, and a non-aqueous solvent,
wherein the positive electrode has a positive electrode active layer including a positive electrode active material, wherein the positive electrode active material includes an iron (Fe) atom, wherein the positive electrode active material containing an iron (Fe) atom is a metal phosphate represented by Formula 2, and
the electrolyte additive has a weight average molecular weight of less than 40,000 g/mole: 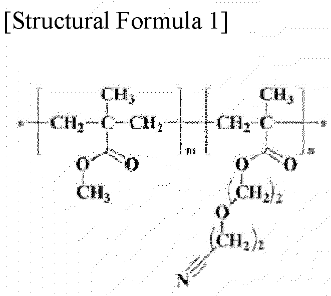 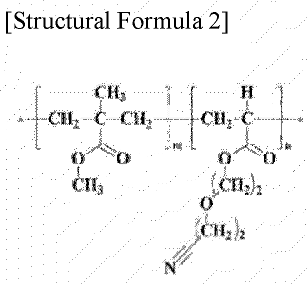 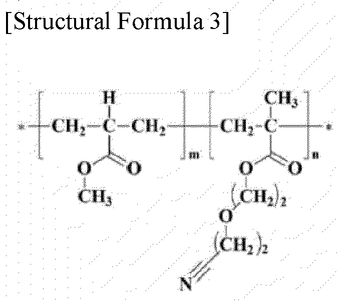 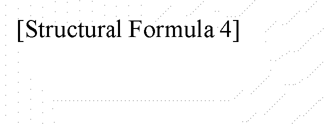 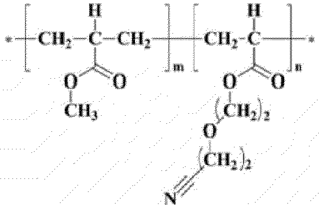 wherein m and n are each independently an integer ranging from 10 to 200;

   [Formula 2] LiFeₓM¹₁₋ₓXO₄
wherein:
   M¹ comprises one or more elements selected from W, Cu, Fe, V, Cr, Co, Ni, Mn, Ti, Zr, Zn, Al, In, Ta, Y, La, Sr, Ga, Sc, Gd, Sm, Ca, Ce, Nb, Mg, B, or Mo,
   X comprises P, and
   x is in a range of 0 < x ≤ 1.0.

Specifically, in the unit represented by any one of Structural Formulas 1 to 4, R₁, R₂, and R₃ are independently be hydrogen or a methyl group, R₄ and R₅ are independently be an ethylene group or a propylene group, and p, q, and r are each 1.

Also, the unit represented by any one of the Structural Formulas 1 to 4 may have a m:n ratio of 1:1.01 to 1:10.

In addition, the electrolyte additive may have a weight average molecular weight of 5,000 to 30,000 g/mole.

Also, the electrolyte additive has a bimodal molecular weight distribution, and may have a polydispersity index (PDI) of 1.2 to 5.0.

In addition the electrolyte additive may be included at less than 5% by weight based on the total weight of the electrolyte composition.

Meanwhile, the positive electrode includes a positive electrode active layer including a positive electrode active material containing an iron (Fe) atom, and the positive electrode active material is a metal phosphate represented by the following Formula 2:

[Formula 2] LiFeₓM¹₁₋ₓXO₄

wherein:
M¹includes one or more elements selected from W, Cu, Fe, V, Cr, Co, Ni, Mn, Ti, Zr, Zn, Al, In, Ta, Y, La, Sr, Ga, Sc, Gd, Sm, Ca, Ce, Nb, Mg, B, or Mo,
X comprises P, and
x is in a range of 0 < x ≤ 1.0.

Also, the negative electrode may include a negative electrode active layer including a negative electrode active material, and the negative electrode active material may include one or more carbon materials selected from natural graphite, artificial graphite, expanded graphite, non-graphitizable carbon, carbon black, acetylene black, or ketjen black.

In addition, the negative electrode active material may further include one or more silicon materials selected from silicon (Si), silicon carbide (SiC), or silicon oxide (SiO_{q}: provided that0.8 ≤ q ≤ 2.5).

In this case, the silicon material may be included at 1 to 20% by weight based on the total weight of the negative electrode active material.

Furthermore, according to one exemplary embodiment of the present invention, there is provided a lithium secondary battery module, which includes:
the lithium secondary battery according to the present invention; and
a module case having the lithium secondary battery installed therein.

### [Advantageous Effects]

A lithium secondary battery according to the present invention has excellent economic feasibility and safety because an iron phosphate of Formula 2 having an olivine structure is included as a positive electrode active material, and also has advantages of excellent battery performance and lifespan because an electrolyte additive of any one of the Structural Formulas 1 to 4 having a specific molecular weight is included in an electrolyte to improve an increase in internal resistance of the battery during charging and discharging and effectively prevent iron ions from being exsolved from the positive electrode active material.

### [Detailed Description of the Invention]

The present invention may have various modifications and various examples, and thus specific examples of the present disclosure are described in detail in the detailed description.

The terms "comprise," "include" and "have" used herein specify the presence of characteristics, numbers, steps, actions, components or members described in the specification or a combination thereof, and it should be understood that the possibility of the presence or addition of one or more other characteristics, numbers, steps, actions, components, members or a combination thereof is not excluded in advance.

Also, when a part of a layer, film, region or plate is disposed "on" another part, this includes not only a case in which one part is disposed "directly on" another part, but a case in which a third part is interposed therebetween. In contrast, when a part of a layer, film, region or plate is disposed "under" another part, this includes not only a case in which one part is disposed "directly under" another part, but a case in which a third part is interposed therebetween. In addition, in this application, "on" may include not only a case of disposed on an upper part but also a case of disposed on a lower part.

Hereinafter, the present invention will be described in more detail.

### Lithium secondary battery

According to one exemplary embodiment of the present invention, there is provided a lithium secondary battery which includes:
an electrode assembly including a positive electrode, a negative electrode, and a separator interposed between the positive electrode and the negative electrode; and
an electrolyte composition including a lithium salt, an electrolyte additive having a unit represented by any one of the Structural Formulas 1 to 4, and a non-aqueous solvent,
wherein the positive electrode has a positive electrode active layer including a positive electrode active material, wherein the positive electrode active material includes an iron (Fe) atom, wherein the positive electrode active material containing an iron (Fe) atom is a metal phosphate represented by Formula 2, and
the electrolyte additive has a weight average molecular weight of less than 40,000 g/mole: 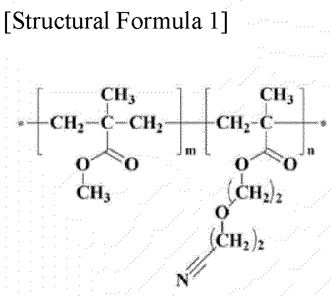 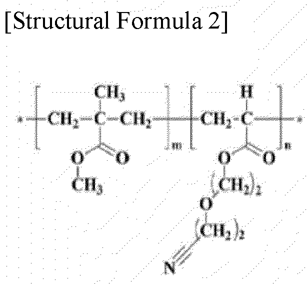 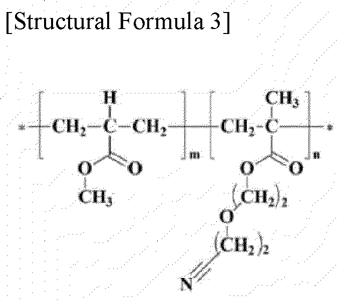 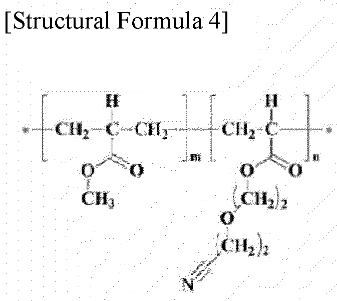 wherein m and n are each independently an integer ranging from 10 to 200;

   [Formula 2] LiFeₓM¹₁₋ₓXO₄
wherein:
   M¹ comprises one or more elements selected from W, Cu, Fe, V, Cr, Co, Ni, Mn, Ti, Zr, Zn, Al, In, Ta, Y, La, Sr, Ga, Sc, Gd, Sm, Ca, Ce, Nb, Mg, B, or Mo,
   X comprises P, and
   x is in a range of 0 < x ≤ 1.0.

The lithium secondary battery according to the present invention includes an electrode assembly including a positive electrode, a negative electrode, and a separator interposed between the positive electrode and the negative electrode; and an electrolyte composition impregnated into the electrode assembly.

In this case, the positive electrode may have a positive electrode active layer, which contains a positive electrode active material having an iron (Fe) atom, on a positive electrode current collector, and an electrolyte composition includes an electrolyte additive having a specific chemical structure and molecular weight in order to prevent and/or inhibit iron (Fe) ions from being exsolved from the positive electrode active material during charging and discharging of the battery.

Described herein is an electrolyte additive having a unit generally represented by the following Formula 1: 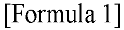 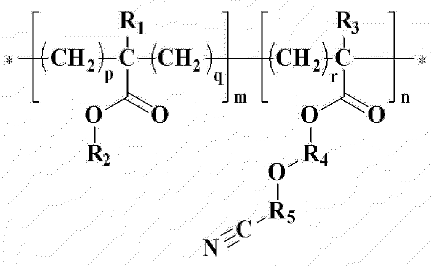 wherein:
R₁, R₂, and R₃ are each independently hydrogen or an alkyl group having 1 to 6 carbon atoms,
R₄ and R₅ are each independently an alkylene group having 1 to 6 carbon atoms,
p, q, and r are each independently an integer ranging from 0 to 5, and
m and n are each independently an integer ranging from 10 to 200.

In the present invention, the unit represented by Formula 1 includes one or more of the following Structural Formulas 1 to 4:

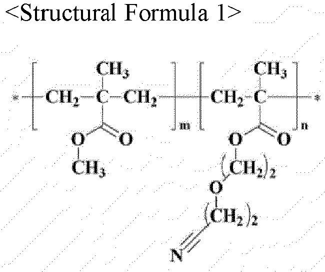

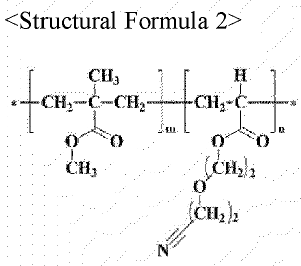

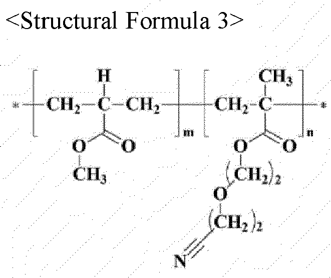

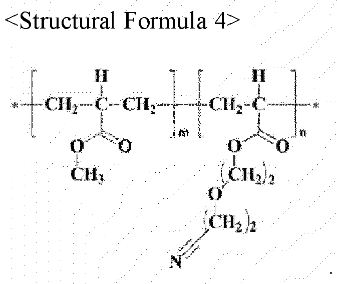

The unit represented by Formula 1 may have excellent solubility in an organic solvent, specifically a non-aqueous solvent.

Also, the unit represented by Formula 1 includes a repeating unit containing a cyano group (-CN), and thus may induce a coordinate bond between a cyano group and metal ions exsolved from the positive electrode active material, particularly iron (Fe) ions. Therefore, the unit represented by Formula 1 may easily capture metal ions, thereby preventing an increase in concentration of metal ions in the electrolyte. In general, iron (Fe) ions have a problem in that, because the iron (Fe) ions have a large ionic size unlike other transition metal ions, they have a small effective nuclear charge, and thus have low capture efficiency. However, in the unit represented by Formula 1, a plurality of repeating units containing a cyano group (-CN) may coordinately bond iron (Fe) ions having a small effective nuclear charge, thereby more efficiently inhibiting the exsolution of the iron (Fe) ions.

In the present invention, the ratio of the number (m) and the number (n) of repeating units containing a cyano group may be adjusted to satisfy a certain ratio range in order to optimize the solubility of the unit represented by any one of the Structural Formulas 1 to 4 in a non-aqueous solvent and metal ion capture efficiency. Specifically, the unit represented by any one of the Structural Formulas 1 to 4 may have a m:n ratio of 1:1.01 to 1:10, more specifically an m:n ratio of 1:2 to 1:10, 1:2 to 1:8, 1:2 to 1:6, 1:3 to 1:7 1:5 to 1:10, or 1:3 to 1:5. When m is 1, and n in any one of the Structural Formulas 1 to 4 is less than 1.01, metal ion capture efficiency may be significantly degraded, and an increase in the battery resistance may also be caused, thereby reducing the charge/discharge capacity. On the other hand, when m is 1, and n is greater than 10, ion conductivity may be degraded, and the battery safety at a high temperature may be reduced.

Also, the electrolyte additive may have a weight average molecular weight of less than 40,000 g/mole. Specifically, the electrolyte additive may have a weight average molecular weight of 1,000 to 40,000 g/mole; 2,000 to 35,000 g/mole; 5,000 to 30,000 g/mole; 5,000 to 25,000 g/mole; 5,000 to 15,000 g/mole; 8,000 to 19,000 g/mole; or 10,000 to 20,000 g/mole. When the weight average molecular weight of the electrolyte additive is greater than or equal to 40,000 g/mole, electrolyte impregnability and the initial resistance and resistance increase rate of the battery may be remarkably enhanced, resulting in a reduced capacity. In this case, the efficiency of exsolved metal ion capture may also be remarkably degraded as the aggregation of the electrolyte additive itself is induced. Even when the aggregation phenomenon is not induced, the electrolyte additive may form a precipitate with the captured metal ions to clog the pores of the separator, resulting in degraded electrical properties of the battery. Also, when the weight average molecular weight of the electrolyte additive is less than 1,000 g/mole, the ability of the electrolyte additive to capture metal ions may not be sufficiently achieved, resulting in a remarkable increase in concentration of metal ions exsolved in the electrolyte composition.

In addition, the electrolyte additive may have a bimodal molecular weight distribution pattern. The expression "having a bimodal molecular weight distribution pattern" may mean that an electrolyte composition includes two electrolyte additives each having the unit represented by Formula 1 with different molecular weights. Here, the bimodal molecular weight distribution pattern may be measured by GPC, and may be calculated using a standard polystyrene conversion method.

As one example, the electrolyte additive includes the unit represented by any one of the Structural Formulas 1 to 4, wherein the electrolyte additive includes a first electrolyte additive having a weight average molecular weight of 12,000±500 g/mole and a second electrolyte additive having a weight average molecular weight of 15,000±500 g/mole. In this case, a bimodal pattern spectrum having two peaks in the vicinity of molecular weights of 12,000 and 15,000, respectively, may be obtained, as measured for the electrolyte additive by GPC. In this case, the second electrolyte additive may be included at 10 to 200 parts by weight based on 100 parts by weight of the first electrolyte additive having a smaller weight average molecular weight, and specifically, it may be included at 10 to 100 parts by weight; 70 to 130 parts by weight; 110 to 200 parts by weight; or 110 to 150 parts by weight based on 100 parts by weight of the first electrolyte additive.

When the electrolyte additive having a bimodal molecular weight distribution is included in the present invention, the exsolution of metal ions from the positive electrode active material may be effectively inhibited while minimizing an increase in resistance of the secondary battery. Specifically, in the electrolyte additive according to the present invention, as the weight average molecular weight increases within in a range having a weight average molecular weight of less than 40,000g/mole, the number of cyano groups in the electrolyte additive molecule increases, so the opportunity of coordinate bonding with iron (Fe) is increased. Therefore, as the weight average molecular weight of the electrolyte additive increases within a range having a weight average molecular weight of less than 40,000g/mole, the electrolyte additive may have an increased performance in capturing metal ions, and at the same time, it may have an increased resistance to the surface of the positive electrode due to an increase in the degree of absorption to the surface of the positive electrode active layer containing iron (Fe). Therefore, by including two types of electrode additives having different weight average molecular weights within a range having a weight average molecular weight of less than 40,000g/mole, the present invention may effectively capture iron (Fe) while preventing an increase in resistance to the electrode surface.

Also, the electrolyte additive may have polydispersity index (PDI) of 1.2 to 5.0. The polydispersity index (PDI) is a value (Mw/Mn) obtained by dividing a weight average molecular weight (Mw) by a number average molecular weight (Mn) of an electrolyte additive. In this case, the electrolyte additive of the present invention may have a polydispersity index of 1.2 to 4.5, 1.2 to 4.0, 1.2 to 3.5, 1.2 to 3.0, 1.2 to 2.5, 1.2 to 1.9, 1.5 to 2.5, 1.8 to 3.1,or 1.6 to 2.2.

As one example, the electrolyte additive may have a polydispersity index(PDI) of 1.8 to 2.1.

As another example, the electrolyte additive includes the unit represented by any one of the Structural Formulas 1 to 4, wherein, when the electrolyte additive has a bimodal molecular weight distribution because the electrolyte additive includes a first electrolyte additive having a weight average molecular weight of 12,000±500 g/mole and a second electrolyte additive having a weight average molecular weight of 15,000±500 g/mole, each of the first electrolyte additive and the second electrolyte additive may have a polydispersity index of 1.6 to 2.0.

In addition, the electrolyte additive may be included at less than 5% by weight based on the total weight of the electrolyte composition. Specifically, the electrolyte additive may be included at 0.05 to 5% by weight; 0.05 to 4% by weight; 0.05 to 3% by weight 0.1 to 2.5% by weight; 0.1 to 2.2% by weight; 0.2 to 1.6% by weight; 0.9 to 1.9% by weight; 1.6 to 2.3% by weight; or 0.1 to 0.8% by weight based on the total weight of the electrolyte composition.

In the present invention, when the content of the electrolyte additive is adjusted within this content range, an increase in internal resistance of the battery due to excess electrolyte additive and the degradation of ion conductivity may be prevented. Also, it is possible to reduce side reactions between the electrolyte composition and the positive electrode active layer, and prevent a decrease in ability to capture the metal ions caused due to a trace amount of the electrolyte additive.

Meanwhile, the electrolyte composition includes a lithium salt and a non-aqueous solvent in addition to the above-described electrolyte additive.

In this case, the lithium salt may be applied without any particular limitation as long as it is used in the non-aqueous electrolyte in the art. Specifically, the lithium salt may include one or more selected from LiCl, LiBr, LiI, LiClO₄, LiBF₄, LiB₁₀Cl10, LiPF₆, LiCF₃SO₃, LiCF₃CO₂, LiAsF₆, LiSbF₆, LiAlCl₄, CH₃SO₃Li,(CF₃SO₂)₂NLi,or(FSO₂)₂NLi.

The concentration of these lithium salt is not particularly limited, but the lower limit of an appropriate concentration range is 0.5 mol/L or more, specifically 0.7 mol/L or more, and more specifically 0.9 mol/L or more, and the upper limit of the appropriate concentration range is 2.5 mol/L or less, specifically 2.0 mol/L or less, and more specifically 1.5 mol/L or less. When the concentration of the lithium salt is less than 0.5 mol/L, ion conductivity may be degraded, resulting in degraded cycle characteristics and output characteristics of a non-aqueous electrolyte battery. Also, when the concentration of the lithium salt is greater than 2.5 mol/L, an increase in viscosity of an electrolyte solution for a non-aqueous electrolyte battery may be caused, and thus ion conductivity may be degraded and cycle characteristics and output characteristics of the non-aqueous electrolyte battery may also be degraded.

Also, when a large amount of the lithium salt is dissolved in a non-aqueous organic solvent at one time, a liquid temperature may increase due to the heat of dissolution of the lithium salt. As such, when the temperature of the non-aqueous organic solvent remarkably increases due to the heat of dissolution of the lithium salt, decomposition of a fluorine-containing lithium salt may be promoted, resulting in the generation of hydrogen fluoride (HF). Hydrogen fluoride (HF) is undesirable because it causes the degradation of battery performance. Therefore, the temperature for dissolving the lithium salt in a non-aqueous organic solvent is not particularly limited, but may be adjusted in a range of -20 to 80°C, specifically in a range of 0 to 60°C.

In addition, the non-aqueous organic solvent used in the electrolyte composition may be applied without any particular limitation as long as it is used in the non-aqueous electrolyte in the art. Specifically, for example,aprotic organic solvents such as N-methyl-2-pyrrolidinone, ethylene carbonate (EC), propylene carbonate (PC), propylene carbonate, butylene carbonate, dimethyl carbonate (DMC), diethyl carbonate (DEC), gamma-butyrolactone, 1,2-dimethoxyethane (DME), tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphate triester, trimethoxymethane, dioxolane derivatives, sulfolane, methylsulfolane, 1,3-dimethyl-2-imidazolidone, propylene carbonate derivative, tetrahydrofuran derivative, ether, methyl propionate (MP), ethyl propionate (EP), propyl propionate (PP), and the like may, for example, be used as the non-aqueous organic solvent.

Also, the non-aqueous organic solvent used in the present invention may be used alone, or two or more types may be used after mixing in any ratio and combination according to a purpose. Among them, propylene carbonate, ethylene carbonate, fluoroethylene carbonate, diethyl carbonate, dimethyl carbonate, and ethyl methyl carbonate are particularly preferred in terms of the electrochemical stability in an oxidation/reduction reaction and the chemical stability against heat or a reaction with a solute.

In addition, the electrolyte composition may further include an electrolyte auxiliary additive, when necessary, in order to prevent the collapse of the negative electrode due to the decomposition of a non-aqueous electrolyte under high-power conditions, or further improve low-temperature high-rate discharge characteristics, high-temperature stability, overcharge protection, a battery expansion inhibition effect at high temperature, and the like.

Specifically, the electrolyte auxiliary additive may include one or more of a cyclic carbonate compound, a sultone compound, or a sulfate-based compound, which may be preferably used in combination. In this case, in an initial activation process of the battery, a more uniform SEI film may be formed on a surface of the negative electrode, and high temperature stability may be improved, which makes it possible to inhibit the gas generation due to electrolyte decomposition.

In this case, the cyclic carbonate compound may include one or more of vinylene carbonate (VC), vinylethylene carbonate (VEC), or fluoroethylene carbonate (FEC), the sultone compound may include one or more of 1,3-propane sultone (PS), 1,4-butane sultone, ethene sultone, 1,3-propene sultone (PRS), 1,4-butene sultone, or 1-methyl-1,3-propene sultone, and the sulfate-basedcompound may include one or more of ethylene sulfate (Esa), trimethylene sulfate (TMS),or methyl trimethylene sulfate (MTMS).

Also, the electrolyte auxiliary additive may be included at 0.01 to 10% by weight, specifically 0.05 to 5% by weight, or 1.5 to 3% by weight based on the total weight of the electrolyte composition. In the present invention, when the content of the electrolyte additive is adjusted within this content range, it is possible to prevent the degradation of resistance characteristics of the battery by the additive being present in a state of being precipitated at room temperature due to excess auxiliary additive. Also, it is possible to prevent the insufficient realization of an effect of improving high-temperature lifespan characteristics due to the addition of a trace amount of the auxiliary additive.

Meanwhile, the positive electrode may have a positive electrode active layer, which contains a positive electrode active material having an iron (Fe) atom, on a positive electrode current collector. Specifically, the positive electrode has a positive electrode active layer which is prepared by coating, drying and pressing a slurry including a positive electrode active material on positive electrode current collector, and may optionally further include a conductive material, a binder, and other additives, when necessary.

In this case, the positive electrode active material is a material that may cause an electrochemical reaction on the positive electrode current collector, and may include a ferric phosphate compound having an olivine crystal structure with excellent stability. For example, the positive electrode active material may include one or more of iron phosphates represented by Formula 2 capable of reversible intercalation and deintercalation of lithium ions:

[Formula 2] LiFeₓM¹₁₋ₓXO₄

wherein:
M¹ includes one or more elements selected from W, Cu, Fe, V, Cr, Co, Ni, Mn, Ti, Zr, Zn, Al, In, Ta, Y, La, Sr, Ga, Sc, Gd, Sm, Ca, Ce, Nb, Mg, B, or Mo,
X includes P, and
x is in a range of 0 < x ≤ 1.0, and preferably 0 < x ≤0.5.

As one example, the iron phosphates represented by Formula 2 may include LiFePO₄, LiFe_{0.5}Mn_{0.5}PO₄, and the like.

Also, the content of the positive electrode active material may be in a range of 85 to 95 parts by weight, specifically in a range of 88 to 95 parts by weight, 90 to 95 parts by weight, 86 to 90 parts by weight, or 92 to 95 parts by weight based on 100 parts by weight of the positive electrode active layer.

In addition, the positive electrode active layer may further include a binder, a conductive material, and other additives in addition to the positive electrode active material.

In this case, the conductive material may be used to improve the performance (such as electrical conductivity, and the like) of the positive electrode, and may include one or more selected from natural graphite, artificial graphite, carbon black, acetylene black, ketjen black, carbon nanotubes, graphene, or carbon fibers. For example, the conductive material may include acetylene black.

Also, the conductive material may be included at 0.5 to 5 parts by weight based on 100 parts by weight of the positive electrode active layer. Specifically, the conductive material may be included at 0.5 to 4 parts by weight; 0.5 to 3 parts by weight; 0.5 to 1 parts by weight; 0.5 to 2 parts by weight; 1 to 3 parts by weight; 2 to 4 parts by weight; 1.5 to 3.5 parts by weight; 0.5 to 1.5 parts by weight; or 1 to 2 parts by weight based on 100 parts by weight of the positive electrode active layer.

In addition, the binder may include one or more resins selected from a polyvinylidene fluoride-hexafluoropropylene copolymer (PVdF-co-HFP), polyvinylidene fluoride (PVdF), polyacrylonitrile, polymethyl methacrylate, or a copolymer thereof. As one example, the binder may include polyvinylidene fluoride.

Also, the positive electrode active layer may include 1 to 10 parts by weight, specifically 2 to 8 parts by weight, or 1 to 5 parts by weight of the binder, based on 100 parts by weight of the positive electrode active layer.

In addition, an average thickness of the positive electrode active layer is not particularly limited, but specifically may be in a range of 50 µm to 300 µm, and more specifically in a range of 100 µm to 200 µm; 80 µm to 150 µm; 120 µm to 170 µm; 150 µm to 300 µm; 200 µm to 300 µm; or 150 µm to 190 µm.

Also, as the positive electrode current collector in the positive electrode, a material having high conductivity without causing a chemical change in the corresponding battery may be used. For example, stainless steel, aluminum, nickel, titanium, calcined carbon, and the like may be used. In the case of aluminum or stainless steel, those surface-treated with carbon, nickel, titanium, silver, and the like may also be used. Also, the positive electrode current collector may have fine irregularities formed on a surface thereof to enhance the adhesive strength of the positive electrode active material, and various forms thereof such as films, sheets, foil, nets, porous materials, foams, non-woven fabrics, and the like are possible. In addition, the average thickness of the collector may be properly adjusted in a range of 3 to 500 µm in consideration of the conductivity and total thickness of the manufactured positive electrode.

Furthermore, the negative electrode may be manufactured by coating, drying and pressing a negative electrode active layer including a negative electrode active material on the negative electrode current collector. In this case, the negative electrode active layer may optionally further include a conductive material as in the positive electrode, an organic binder polymer, and other additives, when necessary.

Here, the negative electrode active material may include one or more selected from lithium metal, nickel metal, copper metal, SUS metal, carbon material capable of reversible intercalation/deintercalation of lithium ions, a metal or an alloy of these metals with lithium, a metal composite oxide, a material capable of doping and dedoping lithium, or a transition metal oxide.

As one example, the negative electrode active material may include one or more carbon materials selected from natural graphite, artificial graphite, expanded graphite, non-graphitizable carbon, carbon black, acetylene black,or ketjen black.

Also, the negative electrode active material may further include a silicon material in addition to the carbon material in order to further enhance the charge/discharge capacity of the battery. The silicon material refers to a material including silicon atoms as a main component. In this case, as such a silicon material, silicon (Si), silicon carbide (SiC), silicon monoxide (SiO), or silicon dioxide (SiO₂) may be used alone or in combination. When silicon monoxide (SiO) and silicon dioxide (SiO₂) are uniformly mixed or complexed as the silicon (Si)-containing material and included in the negative electrode active layer, it may be represented by silicon oxide (SiO_{q};provided that 0.8 ≤ q ≤ 2.5).

In addition, the silicon material may be included at 1 to 20% by weight, specifically 3 to 10% by weight; 8 to 15% by weight; 13 to 18% by weight; or 2 to 8% by weight based on the total weight of the negative electrode active material. In the present invention, when the content of the silicon material is adjusted in the content range as described above, the energy density of the battery may be maximized.

Also, the negative electrode current collector is not particularly limited as long as it has high conductivity without causing a chemical change in the corresponding battery, and for example, as the negative electrode current collector, copper, stainless steel, aluminum, nickel, titanium, calcined carbon, and the like may be used, and in the case of copper or stainless steel, those surface-treated with carbon, nickel, titanium, silver, and the like may be used. In addition, the average thickness of the negative electrode current collector may be properly adjusted in a range of 1 to 500 µm in consideration of the conductivity and total thickness of the manufactured negative electrode.

Described herein is a method of preparing a lithium secondary battery, the method comprising:
preparing an electrode assembly and an electrolyte composition, and
impregnating an electrolyte composition into an electrode assembly,
wherein the electrolyte composition comprises a lithium salt, an electrolyte additive having a unit represented by the following Formula 1, and a non-aqueous solvent, and
wherein the electrode assembly comprises a positive electrode, a negative electrode, and a separator interposed between the positive electrode and the negative electrode, 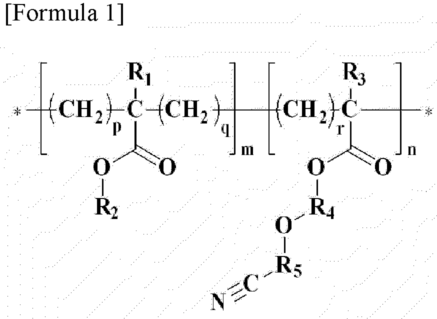
wherein:
   R₁, R₂, and R₃ are each independently hydrogen or an alkyl group having 1 to 6 carbon atoms,
   R₄ and R₅ are each independently an alkylene group having 1 to 6 carbon atoms,
   p, q, and r are each independently an integer ranging from 0 to 5, and m and n are each independently an integer ranging from 10 to 200.

Further, the positive electrode may comprise a positive electrode active layer including a positive electrode active material, wherein the positive electrode active material may contain a metal oxide containing an iron (Fe) atom.

The electrolyte composition and the electrode assembly are described as above.

In addition, the form of the lithium secondary battery according to the present invention is not particularly limited, but specifically may be cylindrical, prismatic, a pouch-type, or a coin-type. According to one exemplary embodiment of the present invention, the lithium secondary battery may be a cylindrical lithium secondary battery, a prismatic lithium secondary battery, a pouch-type lithium secondary battery, or a coin-type lithium secondary battery, particularly, a pouch-type lithium secondary battery.

When the lithium secondary battery according to the present invention has a configuration as described above, the battery may have excellent economic feasibility and safety, and the metal ions derived from the positive electrode active layer may be more effectively captured to remarkably reduce a concentration of metal ions exsolved in the electrolyte composition, thereby improving the increased resistance and side reactions and the degraded performance of the battery caused by the exsolved metal ions even under high-temperature conditions.

### Lithium secondary battery module

According to one exemplary embodiment of the present invention, there is also provided a lithium secondary battery module, which includes:
the above-described lithium secondary battery according to the present invention; and
a module case having the lithium secondary battery installed therein.

The lithium secondary battery module according to the present invention is a battery module that includes a plurality of unit cells and a module casing configured to accommodate the plurality of unit cells, wherein each of the unit cells includes the lithium secondary battery according to the present invention.

When the lithium secondary battery module includes the plurality of lithium secondary batteries of the present invention as the unit cells as described above, the lithium secondary battery module has advantages in that it has low initial resistance and a low resistance increase rate and a high voltage retention rate even under high-temperature conditions, and has a characteristic of remarkably reducing a concentration of the exsolved metal ions in the electrolyte composition.

Meanwhile, the present invention provides a battery pack including the battery module, and a device including the battery pack as a power source.

In this case, specific examples of the device include power tools powered by an electric motor; electric cars including an electric vehicle (EV), a hybrid electric vehicle (HEV), and a plug-in hybrid electric vehicle (PREV); electric two-wheeled vehicles including an E-bike and an E-scooter; an electric golf cart; and a power storage system, but the present invention is not limited thereto.

Hereinafter, the present invention will be described in further detail with reference to the following examples and experimental example.

However, it should be understood that the following examples and experimental example are merely intended to illustrate the present invention, and the contents of the present invention are not limited to the following examples and experimental example.

### EXAMPLES

### A) Preparation of electrolyte composition

As lithium salts, LiPF₆was dissolved at a concentration of 1.0 M in a solvent prepared by mixing ethylene carbonate (EC), dimethyl carbonate (DMC), and ethyl methyl carbonate (EMC) at a volume ratio of 3:4:3, and electrolyte additives were weighed and dissolved with the types and contents shown in Table 1 below. Thereafter, as electrolyte auxiliary additives, vinylene carbonate (VC), 1,3-propane sultone (PS), and ethylene sulfate (Esa) were added at 2.5% by weight, 0.5% by weight, and 0.7% by weight, respectively, to prepare a non-aqueous electrolyte composition.

Here, in the case of Example 5, two electrolyte additives having a weight average molecular weight of 12,000 g/mole and 15,000 g/mole, respectively, while including the unit represented by Structural Formula 1 were mixed and used in a 1:1 weight ratio.

Also, the weight average molecular weights and PDIs of the electrolyte additives were measured using gel permeation chromatography (GPC), and molecular weight distribution patterns were analyzed from the resulting spectra. For the gel permeation chromatography (GPC), Alliance 4 equipment was stabilized. When the equipment was stabilized, a reference sample and a sampling specimen were injected into the equipment to obtain a chromatogram, and a molecular weight was calculated from the obtained results according to an analysis method (System: Alliance 4, Column: Agilent PL mixed B, Eluent: THF, Flow rate: 0.1 mL/min, Temp: 40°C, and Injection volume: 100µL). The measured results are shown in Table 1.

**[Table 1]**

| | Types of additives | | Molecular weight | | | Content [% by weight] |
|---|---|---|---|---|---|---|
| | Chemical structure | m/n | Mw [g/mole] | Distribution pattern | PDI | |
| Example 1 | 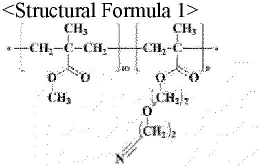 | 20/80 | 12,000 | Unimodal | 1.6 to 1.8 | 0.5 |
| Example 2 | | 20/80 | 15,000 | Unimodal | 1.6 to 1.8 | 0.5 |
| Example 3 | | 20/80 | 15,000 | Unimodal | 1.6 to 1.8 | 2.0 |
| Example 4 | | 20/80 | 15,000 | Unimodal | 1.6 to 1.8 | 5.0 |
| Example 5 | | 20/80 | 12,000/15,000 | bimodal | 1.6 to 1.8/1.6 to 1.8 | 2.0 |
| Example 6 | 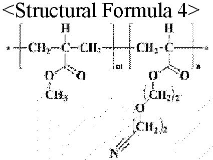 | 20/80 | 15,000 | Unimodal | 1.6 to 1.8 | 0.5 |
| Comp. Example 1 | 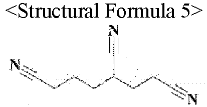 | - | 161.2 | Unimodal | 1.6 to 1.8 | 0.5 |
| Comp. Example 2 | 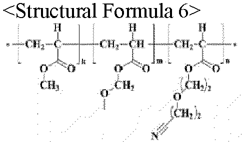 | (k/m/n) 30/1/69 | 51,000 | Unimodal | 1.6 to 1.8 | 0.5 |
| Comp. Example 3 | | (k/m/n) 30/1/69 | 51,000 | Unimodal | 1.6 to 1.8 | 5.0 |

### B) Manufacture of lithium secondary battery

LiFePO₄ was prepared as a positive electrode active material, and the prepared active material, carbon black as a conductive material, and polyvinylidene fluoride as a binder were mixed at a weight ratio of 94:3:3 in N-methyl pyrrolidone (NMP) to form a slurry. Thereafter, the slurry was cast on an aluminum thin plate, dried at 120°C in a vacuum oven, and then rolled to manufacture a positive electrode.

Separately, natural graphite was prepared as a negative electrode active material, and 97 parts by weight of the negative electrode active material and 3 parts by weight of a styrene butadiene rubber (SBR) were mixed in water to form a slurry. Then, the slurry was cast on a copper thin plate, dried at 130°C in a vacuum oven, and then rolled to manufacture a negative electrode.

An18µm-thick separator composed of polypropylene was interposed between the obtained positive and negative electrodes, and inserted into a case. Thereafter, each of the electrolyte compositions prepared in Examples 1 to 6 and Comparative Examples 1 to 3 was injected to manufacture a lithium secondary battery.

### Experimental Example

To evaluate the performance of the lithium secondary battery according to the present invention, experiments were performed as follows.

### A) Analysis of initial resistance

Each of the lithium secondary batteries manufactured in Examples and Comparative Examples was charged and activated under a condition of a current (0.1C) of 200 mA. Thereafter, the DC resistance of each of the activated lithium secondary batteries was measured, a DC resistance deviation rate of each of the lithium secondary batteries was calculated as the initial resistance based on the DC resistance value for the lithium secondary battery of Comparative Example 1 including HTCN as a monomolecular electrolyte additive. The results are shown in Table 2 below.

### B) Analysis of resistance increase rate and voltage retention rate after high-temperature cycle

Each of the lithium secondary batteries manufactured in Examples and Comparative Examples was charged and activated under a condition of a current (0.1C) of 200 mA. Thereafter, each of the activated lithium secondary batteries was charged and discharged 300 times under conditions of a charge termination voltage of 3.6V and a discharge termination voltage of 2.5V at 45°C using a charge/discharge electric current density of 0.33C/0.33C. The DC resistances and charge/discharge capacities of the lithium secondary batteries which were completely charged and discharged 300 times were measured, and a resistance increase rate and capacity retention rate respectively based on a resistance and capacity during an initial charging and discharging cycle were calculated from the measured results. The results are shown in Table 2 below.

### C) Analysis of exsolution amount of metal ions after high-temperature cycle

Because metals exsolved into an electrolyte were reduced on a surface of an active material layer of the negative electrode to induce side reactions, the content of metal ions remaining on a surface of the negative electrode was measured for the lithium secondary batteries subjected to resistance increase rate and voltage retention rate analysis after the high-temperature cycle as described above.

Specifically, each of the lithium secondary batteries of Examples and Comparative Example whose resistance increase rate and voltage retention rate were analyzed was disassembled to separate the negative electrode, and a powder of the active material layer obtained by scraping a surface of the active material layer included in the negative electrode was subjected to inductively coupled plasma analysis (ICP) to measure a content of iron (Fe) ions remaining on a surface of the negative electrode in ppm units. The results are shown in Table 2 below.

**[Table 2]**

| | Initial resistance [%] | Resistance increase rate[%] | Capacity retention rate[%] | Metal exsolution amount[ppm] |
|---|---|---|---|---|
| Example 1 | +1.1 | +8.5 | 89.2 | 339 |
| Example 2 | +2.7 | +8.8 | 89.4 | 341 |
| Example 3 | +5.1 | +10.4 | 89.5 | 312 |
| Example 4 | +17.4 | +10.4 | 84.2 | 298 |
| Example 5 | +3.5 | +8.2 | 89.9 | 308 |
| Example 6 | +2.0 | +8.9 | 89.2 | 339 |
| Comp. Example 1 | - | +30.2 | 88.0 | 750 |
| Comp. Example 2 | +20.6 | 27.1 | 84.3 | 380 |
| Comp. Example 3 | +33.2 | +24.3 | 80.1 | 416 |

As shown in Table 2, it can be seen that the lithium secondary battery according to the present invention has low battery internal resistance as well as a low resistance increase rate, a high voltage retention rate, and a low metal exsolution rate even after the high-temperature cycle.

From these results, it can be seen that the lithium secondary battery according to the present invention has excellent economic feasibility and safety because an iron phosphate of Formula 2 having an olivine structure is included as a positive electrode active material, and also has excellent battery performance and lifespan because an electrolyte additive of any one of the Structural Formulas 1 to 4 having a specific molecular weight is included in an electrolyte to realize low battery resistance and effectively prevent iron ions from being exsolved from the irreversible additive.

## Claims

1. A lithium secondary battery comprising:
an electrode assembly comprising a positive electrode, a negative electrode, and a separator interposed between the positive electrode and the negative electrode; and
an electrolyte composition comprising a lithium salt, an electrolyte additive, and a non-aqueous solvent,
**characterized in that**
the electrolyte additive has a unit represented by any one of the Structural Formulas 1 to 4,
wherein the positive electrode has a positive electrode active layer including a positive electrode active material, wherein the positive electrode active material contains an iron (Fe) atom,
wherein the positive electrode active material containing an iron (Fe) atom is a metal phosphate represented by Formula 2, and
wherein the electrolyte additive has a weight average molecular weight of less than 40,000 g/mole as determined according to the description: 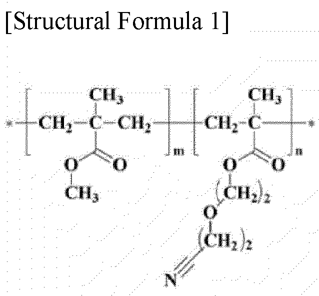 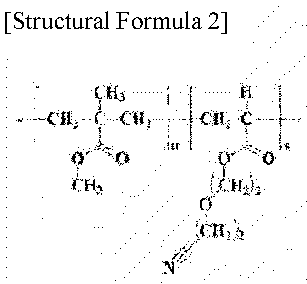 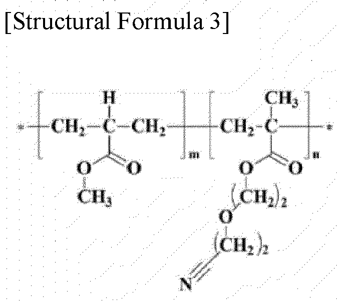 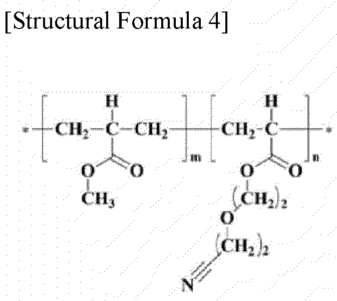 wherein m and n are each independently an integer ranging from 10 to 200;
[Formula 2] LiFeₓM¹₁₋ₓXO₄
wherein:
M¹ comprises one or more elements selected from W, Cu, Fe, V, Cr, Co, Ni, Mn, Ti, Zr, Zn, Al, In, Ta, Y, La, Sr, Ga, Sc, Gd, Sm, Ca, Ce, Nb, Mg, B, or Mo,
X comprises P, and
x is in a range of 0 < x ≤ 1.0.

2. The lithium secondary battery of claim 1, wherein the unit represented by any one of Structural Formulas 1 to 4 has a m:n ratio of 1:1.01 to 1:10.

3. The lithium secondary battery of claim 1, wherein the electrolyte additive has a weight average molecular weight of 5,000 to 30,000 g/mole as determined according to the description.

4. The lithium secondary battery of claim 1, wherein the electrolyte additive has a bimodal molecular weight distribution.

5. The lithium secondary battery of claim 1, wherein the electrolyte additive has a polydispersity index (PDI) of 1.2 to 5.0 as determined according to the description.

6. The lithium secondary battery of claim 1, wherein the electrolyte additive is included at less than 5% by weight based on a total weight of the electrolyte composition.

7. The lithium secondary battery of claim 1, wherein the positive electrode active material containing iron (Fe) atoms represented by Formula 2 is LiFePO₄ or LiFe_{0.5}Mn_{0.5}PO₄.

8. The lithium secondary battery of claim 1, wherein the negative electrode comprises a negative electrode active layer comprising a negative electrode active material, and
the negative electrode active material comprises one or more carbon materials selected from natural graphite, artificial graphite, expanded graphite, non-graphitizable carbon, carbon black, acetylene black, or ketjen black.

9. The lithium secondary battery of claim 8, wherein the negative electrode active material further comprises one or more silicon materials selected from silicon (Si), silicon carbide (SiC), or silicon oxide (SiO_{q}, wherein 0.8 ≤ q ≤ 2.5).

10. The lithium secondary battery of claim 9, wherein the silicon materials are included at 1 to 20% by weight based on a total weight of the negative electrode active material.

11. A lithium secondary battery module, the lithium secondary battery module comprising:
the lithium secondary battery according to claim 1; and
a module case having the lithium secondary battery installed therein.

## Patentansprüche

1. Lithiumsekundärbatterie, umfassend:
eine Elektrodenanordnung, umfassend eine positive Elektrode, eine negative Elektrode und einen Separator, der zwischen der positiven Elektrode und der negativen Elektrode eingefügt ist, und
eine Elektrolytzusammensetzung, umfassend ein Lithiumsalz, ein Elektrolytadditiv und ein nichtwässriges Lösungsmittel,
**dadurch gekennzeichnet, dass**
das Elektrolytadditiv eine durch eine der Strukturformeln 1 bis 4 dargestellte Einheit aufweist,
wobei die positive Elektrode eine Aktivschicht für eine positive Elektrode umfasst, die ein Aktivmaterial für eine positive Elektrode einschließt, wobei das Aktivmaterial für eine positive Elektrode ein Eisen (Fe)-Atom enthält,
wobei das Aktivmaterial für eine positive Elektrode, das ein Eisen (Fe)-Atom enthält, ein durch Formel 2 dargestelltes Metallphosphat ist, und
das Elektrolytadditiv ein gewichtsmittleres Molekulargewicht von weniger als 40.000 g/mol, bestimmt gemäß der Beschreibung, aufweist: 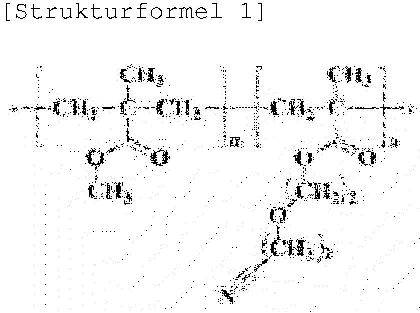 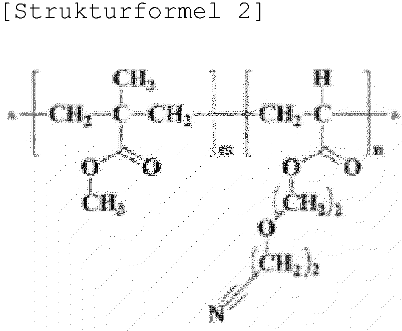 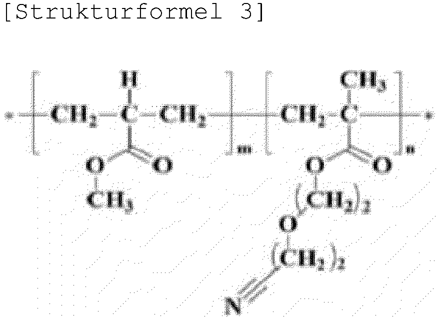 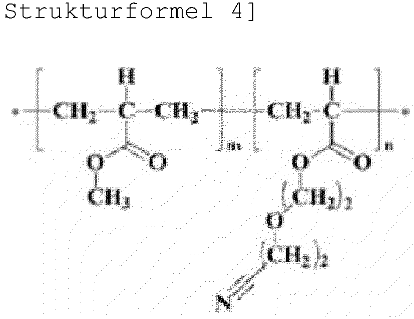
worin m und n jeweils unabhängig eine ganze Zahl im Bereich von 10 bis 200 sind,
[Formel 2] LiFeₓM¹₁₋ₓXO₄
worin:
M¹ ein oder mehrere Elemente, ausgewählt aus W, Cu, Fe, V, Cr, Co, Ni, Mn, Ti, Zr, Zn, Al, In, Ta, Y, La, Sr, Ga, Sc, Gd, Sm, Ca, Ce, Nb, Mg, B oder Mo, umfasst,
X P umfasst und
x in einem Bereich von 0 < x ≤ 1,0 liegt.

2. Lithiumsekundärbatterie nach Anspruch 1, wobei die durch eine der Strukturformeln 1 bis 4 dargestellte Einheit ein m:n-Verhältnis von 1:1,01 bis 10 aufweist.

3. Lithiumsekundärbatterie nach Anspruch 1, wobei das Elektrolytadditiv ein gewichtsmittleres Molekulargewicht von 5.000 bis 30.000 g/mol, bestimmt gemäß der Beschreibung, aufweist.

4. Lithiumsekundärbatterie nach Anspruch 1, wobei das Elektrolytadditiv eine bimodale Molekulargewichtsverteilung aufweist.

5. Lithiumsekundärbatterie nach Anspruch 1, wobei das Elektrolytadditiv einen Polydispersitätsindex (PDI) von 1,2 bis 5,0, bestimmt gemäß der Beschreibung, aufweist.

6. Lithiumsekundärbatterie nach Anspruch 1, wobei das Elektrolytadditiv zu weniger als 5 Gew.-%, bezogen auf das Gesamtgewicht der Elektrolytzusammensetzung, enthalten ist.

7. Lithiumsekundärbatterie nach Anspruch 1, wobei das durch Formel 2 dargestellte Aktivmaterial für eine positive Elektrode, das ein Eisen (Fe)-Atom enthält, LiFePO₄ oder LiFe_{0,5}Mn_{0,5}PO₄ ist.

8. Lithiumsekundärbatterie nach Anspruch 1, wobei die negative Elektrode eine Aktivmaterialschicht für eine negative Elektrode, umfassend ein Aktivmaterial für eine negative Elektrode, umfasst und
das Aktivmaterial für eine negative Elektrode ein oder mehrere Kohlenstoffmaterialien, ausgewählt aus der Gruppe, bestehend aus Naturgraphit, künstlichem Graphit, expandiertem Graphit, nicht-graphitierbarem Kohlenstoff, Ruß, Acetylenruß und Ketjen-Ruß, umfasst.

9. Lithiumsekundärbatterie nach Anspruch 8, wobei das Aktivmaterial für eine negative Elektrode ferner ein oder mehrere Siliciummaterialien, ausgewählt aus Silicium (Si), Siliciumcarbid (SiC) und Siliciumoxid (SiO_{q}, vorausgesetzt, dass 0,8≤q≤2,5) umfasst.

10. Lithiumsekundärbatterie nach Anspruch 9, wobei die Siliciummaterialien zu 1 bis 20 Gew.-%, bezogen auf das Gesamtgewicht des Aktivmaterials für eine negative Elektrode, enthalten sind.

11. Lithiumsekundärbatteriemodul, umfassend:
die Lithiumsekundärbatterie gemäß Anspruch 1 und
ein Modulgehäuse mit der darin eingebauten Lithiumsekundärbatterie.

## Revendications

1. Batterie secondaire au lithium comprenant :
un ensemble électrode comprenant une électrode positive, une électrode négative et un séparateur intercalé entre l'électrode positive et l'électrode négative ; et
une composition d'électrolyte comprenant un sel de lithium, un additif d'électrolyte, et un solvant non aqueux,
**caractérisée en ce que**
l'additif d'électrolyte présente une unité représentée par l'une quelconque des Formules structurelles 1 à 4,
dans laquelle l'électrode positive présente une couche active d'électrode positive incluant un matériau actif d'électrode positive, dans laquelle le matériau actif d'électrode positive contient un atome de fer (Fe),
dans laquelle le matériau actif d'électrode positive contenant un atome de fer (Fe) est un phosphate métallique représenté par la Formule 2, et
dans laquelle l'additif d'électrolyte présente un poids moléculaire moyen en poids inférieur à 40 000 g/mol tel que déterminé selon la description : 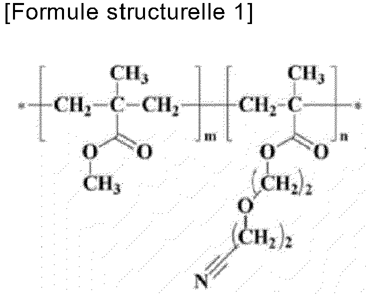 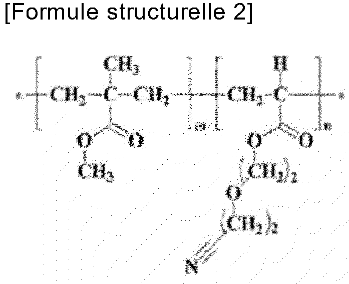 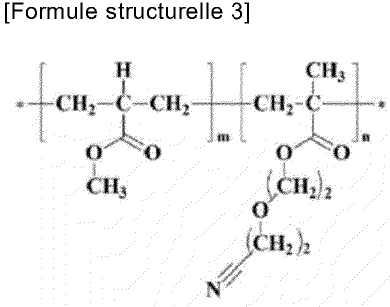 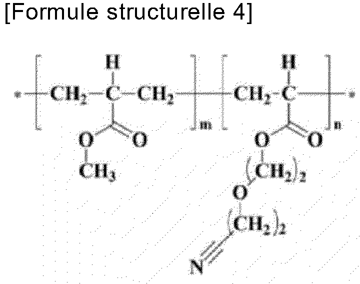 dans laquelle m et n sont chacun indépendamment un nombre entier de 10 à 200 ;
[Formule 2] LiFeₓM¹₁₋ₓXO₄
dans laquelle :
M¹ comprend un ou plusieurs éléments sélectionnés parmi W, Cu, Fe, V, Cr, Co, Ni, Mn, Ti, Zr, Zn, Al, In, Ta, Y, La, Sr, Ga, Sc, Gd, Sm, Ca, Ce, Nb, Mg, B, ou Mo,
X comprend P, et
x est dans une plage de 0 < x ≤ 1,0.

2. Batterie secondaire au lithium selon la revendication 1, dans laquelle l'unité représentée par l'une quelconque des Formules structurelles 1 à 4 présente un rapport m:n de 1:1,01 à 1:10.

3. Batterie secondaire au lithium selon la revendication 1, dans laquelle l'additif d'électrolyte présente un poids moléculaire moyen en poids de 5 000 à 30 000 g/mol tel que déterminé selon la description.

4. Batterie secondaire au lithium selon la revendication 1, dans laquelle l'additif d'électrolyte présente une distribution de poids moléculaire bimodale.

5. Batterie secondaire au lithium selon la revendication 1, dans laquelle l'additif d'électrolyte présente un indice de polydispersité (PDI) de 1,2 à 5,0 tel que déterminé selon la description.

6. Batterie secondaire au lithium selon la revendication 1, dans laquelle l'additif d'électrolyte est inclus à raison de moins de 5 % en poids sur la base d'un poids total de la composition d'électrolyte.

7. Batterie secondaire au lithium selon la revendication 1, dans laquelle le matériau actif d'électrode positive contenant des atomes de fer (Fe) représenté par la Formule 2 est LiFePO₄ ou LiFe₀₋₅Mn_{0,5}PO₄.

8. Batterie secondaire au lithium selon la revendication 1, dans laquelle l'électrode négative comprend une couche active d'électrode négative comprenant un matériau actif d'électrode négative, et
le matériau actif d'électrode négative comprend un ou plusieurs matériaux de carbone sélectionnés parmi graphite naturel, graphite artificiel, graphite expansé, carbone non graphitisable, noir de carbone, noir d'acétylène, ou noir de Ketjen.

9. Batterie secondaire au lithium selon la revendication 8, dans laquelle le matériau actif d'électrode négative comprend en outre un ou plusieurs matériaux de silicium sélectionnés parmi le silicium (Si), le carbure de silicium (SiC), ou l'oxyde de silicium (SiO_{q}, dans laquelle 0,8 ≤ q ≤ 2,5).

10. Batterie secondaire au lithium selon la revendication 9, dans laquelle les matériaux de silicium sont inclus à raison de 1 à 20 % en poids sur la base d'un poids total du matériau actif d'électrode négative.

11. Module de batterie secondaire au lithium, le module de batterie secondaire au lithium comprenant :
la batterie secondaire au lithium selon la revendication 1 ; et
un boîtier de module dans lequel la batterie secondaire au lithium est installée.
